# EUROPÄISCHE PATENTSCHRIFT

(11) **EP 1 866 559 B1**
(45) Veröffentlichungstag und Bekanntmachung des Hinweises auf die Patenterteilung: **08.07.2009**
(21) Anmeldenummer: 06725468.0
(22) Anmeldetag: 31.03.2006
(51) Int. Cl.: F16H 61/30, F16H 61/70, F16H 63/30, F16H 63/44, F16H 63/46, F16H 3/12, F16H 59/68, F16H 63/36

(54) **SCHALTEINRICHTUNG EINES AUTOMATISIERTEN GETRIEBES EINES KRAFTFAHRZEUGS**
SWITCHING DEVICE OF AN AUTOMATIC GEARBOX OF A MOTOR VEHICLE
DISPOSITIF DE CHANGEMENT DE VITESSES POUR LA BOITE DE VITESSE AUTOMATIQUE D'UN VEHICULE A MOTEUR

(30) Priorität: 05.04.2005 DE 102005015481
(43) Veröffentlichungstag der Anmeldung: 19.12.2007
(73) Patentinhaber: Daimler AG, 70327 Stuttgart (DE)
(72) Erfinder: SCHNITZER, Detlef, 73770 Denkendorf (DE)
(74) Vertreter: JENSEN & SON
(86) Internationale Anmeldenummer: PCT/EP2006/061220
(87) Internationale Veröffentlichungsnummer: WO 2006/106076

(56) Entgegenhaltungen:
- EP-A- 0 121 168
- EP-A- 0 592 170
- EP-A- 1 136 308
- WO-A-20/04038262
- WO-A-20/05037590
- US-A- 3 772 933
- US-A- 4 625 840
- US-A- 4 633 987
- US-A- 4 719 812
- US-A- 5 417 124
- US-B1- 6 354 165

## Beschreibung

Die Erfindung betrifft eine Schalteinrichtung eines automatisierten Getriebes eines Kraftfahrzeugs mit den Merkmalen des Patentanspruchs 1.

Die DE 697 11 286 T2 beschreibt eine Schalteinrichtung für ein Getriebe eines Kraftfahrzeugs, bei welchem Schaltelemente einer Nebengruppe des Getriebes mittels elektromagnetisch betätigbaren Ventilen in Form von Magnetventilen ansteuerbar sind. Ein Schaltelement wird von einer Schaltstange betätigt, welche mit einem Kolben einer Kolben-Zylinder-Einheit verbunden ist. Ein Magnetventil kann durch Zu- oder Abführen von Fluid in Form von Druckluft zu der Kolben-Zylinder-Einheit den Kolben und damit die Schaltstange bewegen. Die Schalteinrichtung weist ein Schaltmodul auf, welches mehrere Kolben-Zylinder-Einheiten umfasst. Ein Hauptgetriebe wird mittels eines vom Fahrzeugführer betätigbaren Schalthebels geschaltet.

Die DE 100 49 459 A1 beschreibt der Aufbau und die Arbeitsweise eines zentralen Kupplungsausrückers.

Die US 4,719,812, die alle Merkmale des Oberbegriffs des unabhängigen Anspruchs 1 offenbart, beschreibt ein Getriebe für ein Fahrzeug. Das Getriebe weist eine Hauptgetriebe und eine Nebengruppe auf. Schaltelemente des Getriebes sind mittels hydraulisch betätigten Kolben-Zylinder-Einheiten betätigbar. Die Kolben-Zylinder-Einheiten des Hauptgetriebes sind in einem Schaltmodul zusammengefasst. Die Kolben-Zylinder-Einheit zum Betätigen der Nebengruppe ist von dem genannten Schaltmodul beabstandet angeordnet und mit diesem mittels einer Hydraulikleitung verbunden.

Es ist die Aufgabe der Erfindung, eine Schalteinrichtung vorzuschlagen, welche eine automatisierte Betätigung aller Schaltelemente des Getriebes ermöglicht und nur eine geringe Anzahl an Bauteilen aufweist. Erfindungsgemäß wird die Aufgabe durch eine Schalteinrichtung mit den Merkmalen des Patentanspruchs 1 gelöst.

Das Getriebe ist als ein Gruppengetriebe mit einem Hauptgetriebe und einer ersten Nebengruppe in Form einer Rangegruppe oder einer Splitgruppe ausgeführt. Die Schaltelemente, beispielsweise in Form von Schaltgabeln, des Hauptgetriebes und der ersten Nebengruppe werden mittels fluidbetätigten Kolben-Zylindereinheiten betätigt. Die Schaltelemente sind beispielsweise über Schaltstangen mit verschiebbaren Kolben der Kolben-Zylindereinheiten verbunden. Als Betriebsfluid kann beispielsweise Druckluft oder Getriebeöl verwendet werden. Die Kolben-Zylindereinheiten zum Betätigen des Hauptgetriebes sind in einem Schaltmodul zusammengefasst. Die Zylinder der Kolben-Zylindereinheiten werden damit zumindest teilweise vom Schaltmodul gebildet. Die Kolben-Zylindereinheit zum Betätigen der ersten Nebengruppe ist dagegen vom Schaltmodul beabstandet angeordnet. Sie kann beispielsweise innerhalb eines Gehäuses der ersten Nebengruppe angeordnet sein. Zum Zu- und Abführen des Betriebsfluids ist die vom Schaltmodul beabstandet angeordnete Kolben-Zylindereinheit mittels einer Fluidleitung mit dem Schaltmodul verbunden.

Der beschriebene Aufbau der Schalteinrichtung ermöglicht die automatisierte Betätigung aller Schaltelemente des Getriebes mit einem geringen Bauraumbedarf. Außerdem ist es möglich, eine Vielzahl von benötigten Kanälen für das Betriebsfluid innerhalb des Schaltmoduls anzuordnen.

Das Schaltmodul verfügt über eine Modulgrundplatte, welche einen Teil der Zylinder der Kolben-Zylindereinheiten und zumindest einen Teil eines Gehäuses einer Vorgelegewellenbremse und/oder einen Teil eines zentralen Kupplungsausrückers einer Anfahrkupplung bildet.

Die Modulgrundplatte, welche als Gussteil, beispielsweise aus Aluminium, hergestellt werden kann, bildet damit auch Teile der Vorgelegewellenbremse und des zentralen Kupplungsausrückers. Diese Teile müssen nicht separat gefertigt werden, was höhere Kosten verursachen würde. Außerdem ergibt sich damit eine geringe Anzahl verschiedener Bauteile der Schalteinrichtung, was die Montage der Schalteinrichtung vereinfacht und Kosten für Lagerung der Bauteile gering hält.

Mittels der Vorgelegewellenbremse kann eine Vorgelegewelle des Getriebes bei Hochschaltungen abgebremst werden. Die Vorgelegewellenbremse wird ebenfalls mit dem Betriebsfluid betätigt, mittels welchen auch die den Schaltelementen des Getriebes zugeordneten Kolben-Zylindereinheiten betätigbar sind.

Die Anfahrkupplung ist insbesondere zwischen einem Motor und dem Getriebe angeordnet und als automatisierte Reibungskupplung ausgeführt. Der zentrale Kupplungsausrücker der Kupplung wird ebenfalls mit dem genannten Betriebsfluid betätigt. Die Modulgrundplatte bildet insbesondere einen Teil eines Trägerkörpers des zentralen Kupplungsausrückers. Auf dem Trägerkörper wird ein Ringkolben des Kupplungsausrückers beim Öffnen und Schließen der Kupplung geführt.

Ein zentraler Kupplungsausrücker zeichnet sich dadurch aus, dass ein für das Öffnen und Schließen der Anfahrkupplung notwendiger Druckraum und ein darin geführter Ringkolben um eine Getriebeeingangswelle herum angeordnet sind. Der Druckraum kann mit Betriebsfluid beaufschlagt werden, so dass eine Verschiebung des Ringkolbens zu einer Betätigung der Anfahrkupplung führt.

In Ausgestaltung der Erfindung ist jeder Kolben-Zylindereinheit ein einzelnes Schaltelement des Hauptgetriebes oder der ersten Nebengruppe zugeordnet. Ein Kolben einer Kolben-Zylindereinheit ist beispielsweise mittels einer Schaltstange mit einer einzigen Schaltgabel verbunden. Damit können die Schaltelemente völlig unabhängig voneinander angesteuert werden.

In Ausgestaltung der Erfindung weist das Getriebe eine zweite Nebengruppe auf. Diese kann beispielsweise als eine zwischen Anfahrkupplung und Hauptgetriebe angeordnete Splitgruppe ausgeführt sein. Eine Kolben-Zylindereinheit zum Betätigen eines Schaltelements der zweiten Nebengruppe ist im Schaltmodul angeordnet. Damit können die notwendigen Kanäle ebenfalls im Schaltmodul vorgesehen werden, so dass keine zusätzlichen Fluidleitungen notwendig sind.

In Ausgestaltung der Erfindung sind die Schaltelemente mittels elektromagnetisch betätigbaren Ventilen ansteuerbar. Das Schaltmodul weist Ausnehmungen auf, wobei jede Ausnehmung jeweils eines der Ventile teilweise aufnehmen kann. Die Ventile werden von einer am Schaltmodul angeordneten Steuerungseinrichtung angesteuert. Die Steuerungseinrichtung weist Ausnehmungen auf, wobei ebenfalls jede Ausnehmung jeweils eines der Ventile teilweise aufnehmen kann. Außerdem verfügt die Steuerungseinrichtung über Spulen, mittels welchen die Ventile elektromagnetisch betätigt werden können. Das Schaltmodul, die Ventile und die Steuerungseinrichtung sind dabei jeweils als einzelne Bauteile ausgeführt. Das Ventil und die zugehörige Spule sind also nicht in einem Bauteil zusammengefasst.

Damit ist keine Verkabelung zwischen den Spulen der Ventile und der Steuerungseinrichtung außerhalb der Steuerungseinrichtung notwendig. Eine eventuell notwendige Verkabelung kann komplett innerhalb der Steuerungseinrichtung vorgesehen werden. Damit kann die Verkabelung der Spulen vor der Montage der Schalteinrichtung vollständig geprüft werden. Außerdem muss während der Montage keine Verkabelung der Spulen durchgeführt werden, was zu einer Zeitersparnis führt und eine mögliche Fehlerquelle ausschließt. Im Betrieb der Schalteinrichtung ist die eventuell notwendige Verkabelung durch ein Gehäuse der Steuerungseinrichtung vor Beschädigungen geschützt.

In Ausgestaltung der Erfindung sind alle Ventile untereinander austauschbar. Dies wird dadurch gewährleistet, dass alle Ventile die selben Anschlüsse und die selben Abmessungen aufweisen. Insbesondere sind alle Ventile der Schalteinrichtung identisch. Damit kann es bei der Montage der Schalteinrichtung zu keinen Verwechslungen zwischen verschiedenen Ventilen kommen. Dies macht die Montage einfacher und die Gefahr, einen Fehler bei der Montage zu machen, ist gering. Falls bei einem Ventil während des Betriebs des Kraftfahrzeugs ein Defekt auftritt und kein Ersatzventil zur Verfügung steht, können die Ventile untereinander getauscht werden. Falls das defekte Ventil für den Betrieb des Getriebes unbedingt notwendig ist, so kann es gegen ein Ventil, das nicht zwingend benötigt wird, getauscht werden. Beispielsweise ist ein Ventil zur Ansteuerung einer Rangegruppe eines Gruppengetriebes für den Betrieb des Getriebes erforderlich, wohingegen das Getriebe mit einem defekten Ventil einer Splitgruppe weiterhin betriebsbereit ist. In diesem Fall könnte ein defektes Ventil für die Rangegruppe mit einem intakten Ventil der Splitgruppe getauscht werden.

In Ausgestaltung der Erfindung sind die Ausnehmungen des Schaltmoduls und die Steuerungseinrichtung so angeordnet, dass die Steuerungseinrichtung und die Ventile entfernt werden können, ohne ein Gehäuse des Getriebes öffnen zu müssen. Ein Ersetzen oder Austauschen von Ventilen oder der Steuerungseinrichtung ist so mit einem sehr geringen Aufwand möglich.

Bei entsprechendem Einbau des Getriebes im Kraftfahrzeug können damit im eingebauten Zustand des Getriebes Ventile ersetzt oder untereinander ausgetauscht werden. Es ist so auch möglich, die Steuerungseinrichtung zu tauschen, ohne das Getriebe aus dem Kraftfahrzeug ausbauen zu müssen. Damit können etwaige Reparaturen einfach und kostengünstig durchgeführt werden. Falls keine Werkstatt zur Verfügung steht, können die Teile mit dem zur Verfügung stehenden Bordwerkzeug ersetzt oder ausgetauscht werden. Dies ermöglicht eine hohe Verfügbarkeit des Getriebes und damit des Kraftfahrzeugs.

In Ausgestaltung der Erfindung weist die Schalteinrichtung ein vom Schaltmodul beabstanded angeordnetes Sensormodul auf. Das Sensormodul verfügt über Sensoren, mittels welchen Betriebsgrößen des Getriebes erfassbar sind. Betriebsgrößen sind beispielsweise Drehzahlen einer Haupt- und Vorgelegewelle, Positionen der Schaltstangen und damit der Schaltelemente und eine Temperatur eines Getriebeöls. Die Sensoren stehen zumindest mittelbar mit der Steuerungseinrichtung in Signalverbindung. Damit kann die Steuerungseinrichtung die erfassten Betriebsgrößen verarbeiten und bei der Ansteuerung der Ventile berücksichtigen. Die Zusammenfassung der Sensoren in einem Sensormodul ermöglicht es, das komplette Sensormodul als eine Einheit vorzufertigen. Notwendige elektrische Verbindungen können beispielsweise auf einer Platine des Sensormoduls vorgesehen werden. Das Sensormodul kann vor dem Einbau in das Getriebe geprüft werden.

In Ausgestaltung der Erfindung verfügt das Sensormodul über ein Auswertemodul, welches Signale der Sensoren erfasst, vorverarbeitet und über Datenleitungen an die Steuerungseinrichtung sendet. Die Vorverarbeitung kann beispielsweise darin bestehen, dass das Auswertemodul aus den Rohsignalen der Sensoren die Betriebsgrößen berechnet und zusätzlich eine Tiefpassfilterung der Signale durchführt. Das Auswertemodul und die Steuerungseinrichtung können über eine serielle Busverbindung, beispielsweise einen CAN-Bus, verbunden sein. Damit muss nicht für jeden Sensor eine separate elektrische Verbindung zur Steuerungseinrichtung hergestellt werden. Es ist ausreichend nur eine Verbindung zwischen dem Auswertemodul und der Steuerungseinrichtung herzustellen. Dies ist sehr kostengünstig und wenig fehleranfällig.

In Ausgestaltung der Erfindung wird das Sensormodul von der Steuerungseinrichtung über Versorgungsleitungen mit einer Versorgungsspannung versorgt. Die Versorgungsleitungen können insbesondere parallel zu den notwendigen Signalleitungen verlaufen.

In Ausgestaltung der Erfindung sind Versorgungsleitungen und/oder Signalleitungen zwischen dem Sensormodul und der Steuerungseinrichtung in einem Teilabschnitt an der Fluidleitung zwischen Schaltmodul und Kolben-Zylindereinheit der Nebengruppe entlang geführt. Insbesondere sind die Fluidleitung, die Versorgungsleitungen und/oder Datenleitungen in dem genannten Teilabschnitt gemeinsam in einen Kunststoffmantel eingebettet.

Die Leitungen können beispielsweise mit einem thermoplastischen Kunststoff umspritzt werden. Die Verbindungsleitung ist damit als ein starres Gebilde ausgeführt, das aber dennoch eine gewisse Flexibilität aufweist. Die Kontur der Verbindungsleitung kann so festgelegt werden, dass sie genau an den vorhandenen Bauraum, beispielsweise innerhalb des Gehäuses des Getriebes angepasst ist. Damit ist auch der Verlauf der Versorgungsleitungen und der Datenleitungen festgelegt, die für sich alleine keine feste Kontur aufweisen. Dies ist notwendig, um Beschädigungen der elektrischen Leitungen im Betrieb des Antriebsaggregats zu verhindern. Ansonsten müssten die elektrischen Leitungen während der Montage des Getriebes an anderen Stellen des Getriebes fixiert werden.

Die elektrischen Leitungen werden vom Kunststoffmantel, in den sie eingebettet sind, zusätzlich geschützt. Dies gilt sowohl bei der Montage, als auch im Betrieb des Getriebes.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:
- Fig. 1: eine schematische Darstellung eines automatisierten Getriebes,
- Fig. 2: einen Querschnitt durch eine Verbindungsleitung mit Fluidleitungen und elektrischen Leitungen,
- Fig. 3: eine Schalteinrichtung des automatisierten Getriebes,
- Fig. 4: ein in einem Gehäuseteil des Getriebes angeordnetes Sensormodul,
- Fig. 5: eine Modulgrundplatte eines Schaltmoduls der Schalteinrichtung,
- Fig. 6: ein Druckluftanschluss der Modulgrundplatte,
- Fig. 7: ein Moduldeckel des Schaltmoduls,
- Fig. 8: ein symmetrischer Dreistellungszylinder,
- Fig. 9: einen Ausschnitt der Schalteinrichtung mit einem elektromagnetisch betätigbaren Ventil und
- Fig. 10: eine Verriegelung von Schaltstangen.

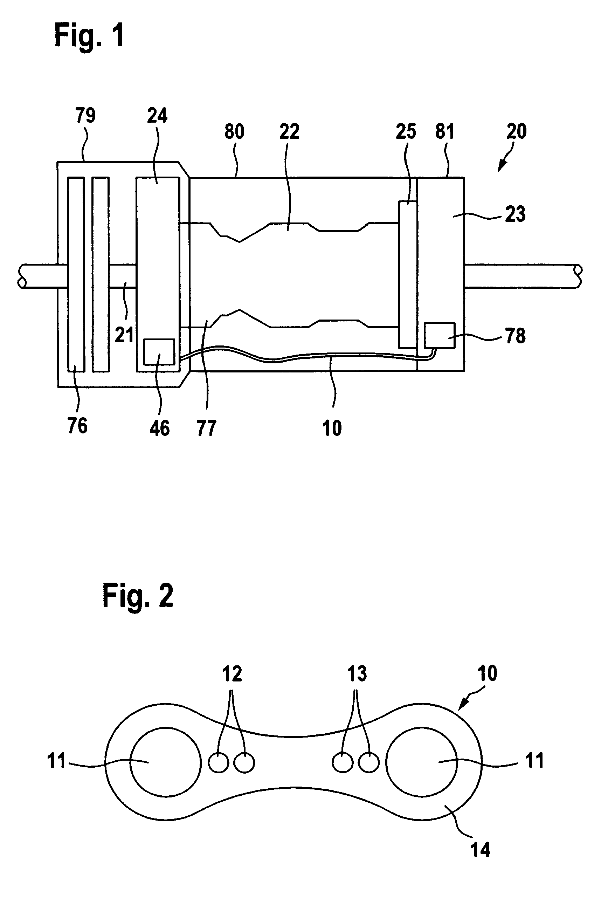

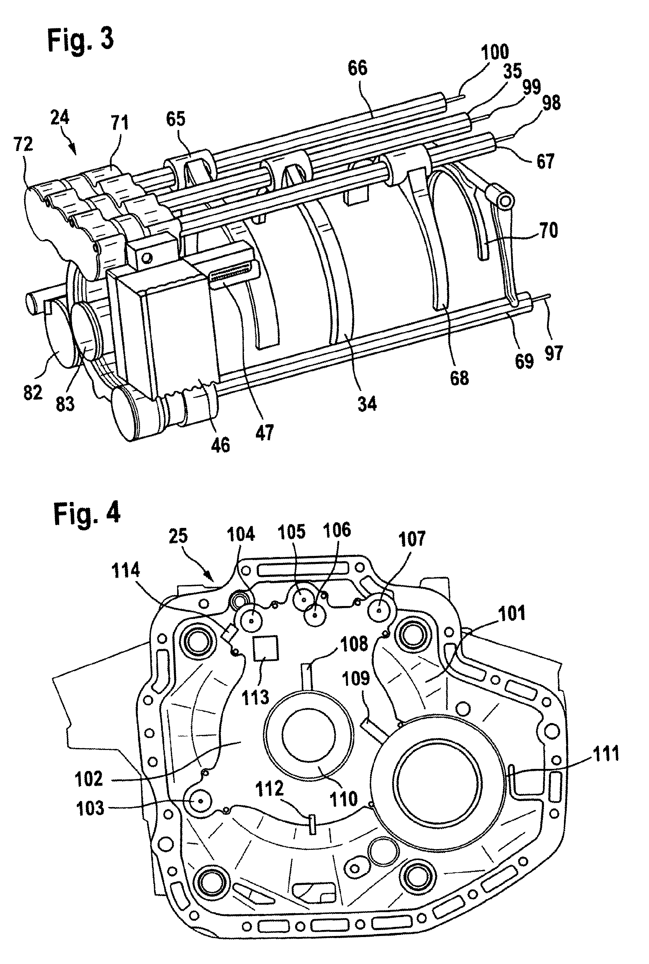

Gemäß Fig. 1 weist ein automatisiertes Getriebe 20, welches als Zahnräderwechselgetriebe in Vorgelegebauweise ausgeführt ist, eine Getriebeeingangswelle 21 auf, welche mittels einer automatisierten Anfahrkupplung 76 mit einem nicht dargestellten Motor verbunden ist. Das Getriebe 20 weist eine Splitgruppe 77, ein Hauptgetriebe 22 und ein nachgeschaltetes Gruppengetriebe 23 in Form einer Rangegruppe auf. Nicht in Fig. 1 dargestellte Schaltelemente des Hauptgetriebes 22 und der Splitgruppe 77 werden von nicht dargestellten Kolben-Zylindereinheiten, welche in einem Schaltmodul 24 zusammengefasst sind, betätigt. Das Schaltmodul 24 ist zwischen Anfahrkupplung 76 und Splitgruppe 77 angeordnet. Ein nicht dargestelltes Schaltelement des Gruppengetriebes 23 wird von einer Kolben-Zylindereinheit 78, welche innerhalb des Gruppengetriebes 23 angeordnet ist, betätigt. Zwischen dem Hauptgetriebe 22 und dem Gruppengetriebe 23 ist ein Sensormodul 25 angeordnet. Das Sensormodul 25 weist nicht dargestellte Sensoren auf, mittels welchen Drehzahlen des Getriebes 20 und Positionen der Schaltelemente erfasst werden können. Weiterhin verfügt das Sensormodul 25 über ein in der Fig. 1 nicht dargestelltes Auswertemodul 113 (siehe Fig. 4), welches die erfassten Sensorsignale vorverarbeitet und an eine Steuerungseinrichtung 46 des Getriebes 20 sendet. Die Steuerungseinrichtung 46 ist ebenso wie alle Ventile zur Ansteuerung der Kolben-Zylindereinheiten mit Druckluft am Schaltmodul 24 angeordnet.

Das Schaltmodul 24 ist über eine Verbindungsleitung 10 mit dem Sensormodul 25 und dem Gruppengetriebe 23 verbunden. Die verschiedenen Elemente des Getriebes 20 sind in drei Gehäuseteilen angeordnet, welche zusammen ein Gehäuse des Getriebes 20 bilden. Die Anfahrkupplung 76 und das Schaltmodul 24 sind in einem vorderen Gehäuseteil 79 angeordnet, welches mit dem Motor verbunden ist. An das vordere Gehäuseteil 79 schließt sich ein mittleres Gehäuseteil 80 an, in welchem die Splitgruppe 77, das Hauptgetriebe 22 und das Sensormodul 25 angeordnet sind. Das Gehäuse des Getriebes 20 wird durch ein hinteres Gehäuseteil 81 abgeschlossen, welches das nachgeschaltete Gruppengetriebe 23 beinhaltet.

Gemäß Fig. 2 weist die Verbindungsleitung 10 zwei Fluidleitungen 11 auf, welche aus gebogenen Metallrohren bestehen. Die Fluidleitungen 11 sind parallel zueinander angeordnet. Mittels der Fluidleitungen 11 sind dem Gruppengetriebe 23 zugeordnete Ventile, welche ebenfalls im Schaltmodul 24 angeordnet sind, mit der Kolben-Zylindereinheit 78 in der Nachschaltgruppe 23 verbunden.

Die Verbindungsleitung 10 enthält außerdem Versorgungsleitungen 12 zur Spannungsversorgung des Sensormoduls 25, sowie Signalleitungen 13 zur Übertragung der Signalen vom Auswertemodul 113 des Sensormoduls 25 zur Steuerungseinrichtung 46. Die Versorgungsleitungen 12 und die Signalleitungen 13 verlaufen parallel zu und zwischen den beiden Fluidleitungen 11. Die elektrischen Leitungen (Versorgungsleitungen 12 und Signalleitungen 13) sind gemeinsam mit den Fluidleitungen 11 in einen Kunststoffmantel 14 eingebettet. Der Kunststoffmantel 14 umgibt die Fluidleitungen 11, die Versorgungsleitungen 12 und die Signalleitungen 13 vollständig.

Es wäre auch denkbar, dass Teile der Querschnitte der Fluidleitungen 11, der Versorgungsleitungen 12 und der Signalleitungen 13 aus dem Kunststoffmantel 14 herausragen.

Gemäß Fig. 3 sind Schaltelemente des automatisierten Getriebes 20 in Form von Schaltgabeln 34, 65, 68 und 70 mit Schaltstangen 35, 66, 67 und 69 verbunden. Bei einer Bewegung der Schaltstangen 35, 66, 67 und 69 werden auch die Schaltgabeln 34, 65, 68 und 70 bewegt. Mittels der Schaltgabel 65 kann die Splitgruppe 77, mit den Schaltgabeln 34 und 68 Vorwärtsgänge des Hauptgetriebes 22 und mit der Schaltgabel 70 ein Rückwärtsgang des Hauptgetriebes 22 geschaltet werden.

Die Schaltstangen 35, 66, 67 und 69 sind mit Kolben von in der Fig. 3 nicht dargestellten Kolben-Zylindereinheiten verbunden, so dass eine Bewegung der Kolben auf die Schaltstangen 35, 66, 67 und 69 und damit auf die Schaltgabeln 34, 65, 68 und 70 übertragen wird. Die Kolben-Zylindereinheiten sind in einem Schaltmodul 24 angeordnet, welches eine Modulgrundplatte 71 und einen Moduldeckel 72 aufweist.

Am Schaltmodul 24 ist die elektronische Steuerungseinrichtung 46 angeordnet, welche über einen Getriebestecker 47 mit Spannung versorgt und mit anderen Steuerungseinrichtungen des Kraftfahrzeugs verbunden werden kann.

Die Schaltstangen 35, 66, 67 und 69 weisen an ihren dem Schaltmodul abgewandten Ende Sensorstifte 99, 100, 98 und 97 auf. Die Sensorstifte 99, 100, 98 und 97 sind als dünne Stifte ausgeführt, welche koaxial zu den Schaltstangen 35, 66, 67 und 69 verlaufen. Die Sensorstifte 99, 100, 98 und 97 tauchen in so genannte Sensorspulen 103 - 107 ein, welche am Sensormodul 25 angeordnet sind. Damit ist es möglich, die Position der Schaltstangen 35, 66, 67 und 69 zu messen.

Gemäß Fig. 4 ist das Sensormodul 25 an einer Rückwand 101 des mittleren Gehäuseteils 80 angeordnet. An die Rückwand 101 schließt die Nebengruppe 23 an. Das Sensormodul 25 besteht aus einer Platine 102 auf welcher 5 Sensorspulen 103 - 107 angeordnet sind. Die Sensorspulen 103 - 107 sind so angeordnet, dass die Sensorstifte 99, 100, 98 und 97 der Schaltstangen 35, 66, 67 und 69 in die Sensorspulen 103 - 107 eintauchen können. Mittels der Sensorspulen 103 - 107 kann gemessen werden, wie weit die Sensorstifte 99, 100, 98 und 97 eintauchen. Damit kann die Position der Schaltstangen 35, 66, 67 und 69 gemessen werden. Das Sensormodul 25 weist außerdem zwei induktive Drehzahlsensoren 108 und 109 auf, mittels welchen die Drehzahl von Sensorzahnrädern 110 und 111 gemessen werden können. Das Sensorzahnrad 110 ist mit einer nicht dargestellten Hauptwelle und das Sensorrad 111 mit der nicht dargestellten Vorgelegewelle verdrehfest verbunden. Mit den Drehzahlsensoren 108 und 109 können damit die Drehzahlen der Hauptwelle und der Vorgelegewelle gemessen werden. Außerdem verfügt das Sensormodul 25 über einen Temperatursensor 112, mittels welchem die Temperatur des Getriebeöls gemessen werden kann.

Alle Sensoren sind über nicht dargestellte elektrische Verbindungen auf der Platine 102 mit einem Auswertemodul 113 verbunden. Das Auswertemodul 113 bestimmt aus den Sensorsignalen die einzelnen Betriebsgrößen. Über einen Stecker 114 ist das Sensormodul 25 und damit auch das Auswertemodul 113 mit der Steuerungseinrichtung 46 verbunden.

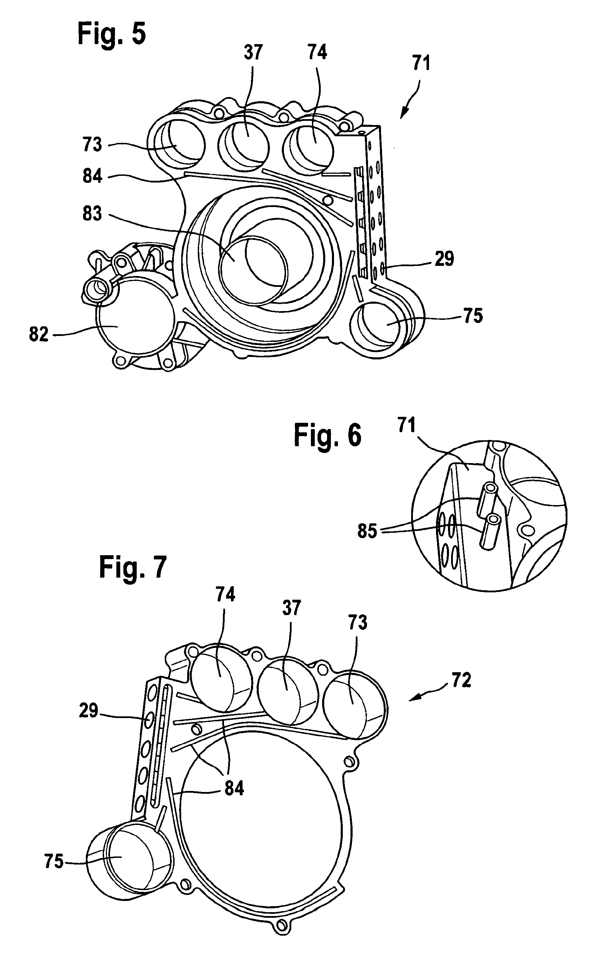

Gemäß Fig. 5 bildet der Modulgrundkörper 71 des Schaltmoduls 24 einen Teil der Zylinder der Kolben-Zylindereinheiten 37, 73, 74 und 75, welche zur Betätigung der Schaltstangen 35, 66, 67 und 69 vorgesehen sind. Der Modulgrundkörper 71 bildet außerdem ein Gehäuse 82 einer Vorgelegewellenbremse und einen Teil eines Trägerkörpers 83 eines zentralen Kupplungsausrückers. Der Trägerkörper 83 weist dabei im wesentlichen die Form eines Hohlzylinders auf. Die Vorgelegewellenbremse und der Kupplungsausrücker werden ebenfalls mittels Druckluft betätigt.

Der Modulgrundkörper 71 weist hauptsächlich zylinderförmige Ausnehmungen 29 auf, welche elektromagnetisch betätigbare Ventile teilweise aufnehmen können. Mittels der Ventile kann den Kolben-Zylindereinheiten, dem Kupplungsausrücker und der Vorgelegewellenbremse Druckluft zugeführt oder Druck abgebaut werden. Dazu sind im Modulgrundkörper 71 Kanäle 84 enthalten, welche die Kolben-Zylindereinheiten, die Vorgelegewellenbremse und den Kupplungsausrücker mit den ihnen zugeordneten Ventilen verbinden.

Die Ventile zur Ansteuerung der Kolben-Zylindereinheit 78 werden mittels der Fluidleitungen der Verbindungsleitung 10 mit der Kolben-Zylindereinheit 78 verbunden. Dazu weist der Modulgrundkörper 71 Anschlüsse 85 auf. Die Anschlüsse 85 sind gemäß Fig. 6 als kurze Hohlzylinder ausgeführt, welche mit den zugehörigen Ausnehmungen 49 verbunden sind.

Gemäß Fig. 7 bildet der Moduldeckel 72 des Schaltmoduls 24 ebenfalls einen Teil der Zylinder der Kolben-Zylindereinheiten 37, 73, 74 und 75. Außerdem weist der Moduldeckel 72 weitere hauptsächlich zylinderförmige Ausnehmungen 29 auf, welche Ventile teilweise aufnehmen können. Zur Verteilung der Druckluft verfügt der Moduldeckel ebenfalls über Kanäle 84.

Der Modulgrundkörper 71 und der Moduldeckel 72 sind als Aluminium Gussteile ausgeführt.

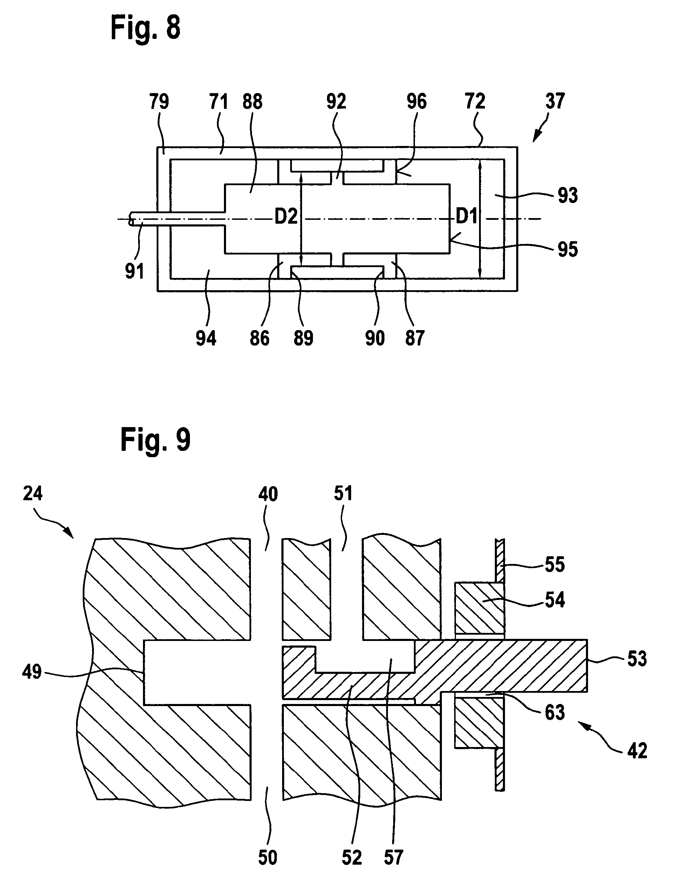

Der Moduldeckel 72 und der Modulgrundkörper 71 sind so am vorderen Gehäuseteil 79 in Richtung Splitgruppe 77 verschraubt, dass sie gemeinsam die Zylinder der Kolben-Zylindereinheiten 37, 73, 74 und 75 bilden. In Fig. 8 ist beispielhaft die Kolben-Zylindereinheit 37 schematisch dargestellt. Innerhalb des Zylinders sind zwei Hohlkolben 86 und 87 angeordnet. Die Hohlkolben 86 und 87 weisen jeweils zwei unterschiedliche Durchmesser D1, D2 auf, wobei sie so innerhalb des Zylinders angeordnet sind, dass jeweils der kleinere Durchmesser D2 nach axial nach innen gerichtet ist. Der Zylinder weist zu den Durchmessern D1, D2 der Hohlkolben 86 und 87 korrespondierende Durchmesser auf, so dass sich für den rechten Hohlzylinder 87 ein Anschlag 90 axial nach links und für den linken Hohlzylinder 86 ein Anschlag 89 axial nach rechts ergibt. Innerhalb der Hohlkolben 86 und 87 ist verschieblich ein innerer Kolben 88 angeordnet, der mit einer Kolbenstange 91 fest verbunden ist. Die Kolbenstange 91 ist wiederum mit der Schaltstange 35 verbunden, so dass sich bei einer Verschiebung des Kolbens 88 innerhalb des Zylinders auch die Schaltstange 35 verschiebt.

Der Kolben 88 weist einen Bund 92 auf, der einen dem kleineren Durchmesser D2 der Hohlkolben 86 und 87 entsprechenden Durchmesser aufweist. Der Kolben 88 ist so angeordnet, dass der Bund 92 zwischen den Hohlkolben 86 und 87 liegt.

Der Moduldeckel 72, der Kolben 88 und der Hohlkolben 87 bilden einen rechten Druckraum 93 und der Modulkörper 71, das vordere Gehäuseteil 79, der Kolben 88 und der Hohlkolben 86 einen linken Druckraum 94. Die Druckräume 93 und 94 sind mit in der Fig. 6 nicht dargestellten Kanälen 84 mit ihnen zugeordneten Ventilen verbunden. Damit können die Druckräume 93 und 94 mit Druck beaufschlagt, also belüftet oder drucklos gemacht, also entlüftet werden.

Wird in der dargestellten Mittelstellung des Kolbens 88 der rechte Druckraum 93 belüftet und der linke Druckraum 94 entlüftet, so wird der Kolben 88 und der Hohlkolben 86 so weit nach links verschoben, bis der Kolben 88 am vorderen Gehäuseteil 79 anstößt. Der Hohlkolben 87 bleibt in der dargestellten Position. Die dabei auf die Kolbenstange 91 wirkende Kraft ergibt sich aus dem Druck im Druckraum 93 und der Kolbenfläche 95 des Kolbens 88.

Soll nun der Kolben 88 wieder nach rechts bewegt werden, so wird der linke Druckraum 94 belüftet und der Druckraum 93 entlüftet. Der Kolben 88 und der Hohlkolben 86 bewegen sich damit nach rechts. Der Hohlkolben 86 bewegt sich so weit nach rechts, bis er am Anschlag 89 des Zylinders anstößt. Der Kolben 88 bewegt sich weiter, bis die Kolbenfläche 95 am Moduldeckel 72 anstößt.

Die dabei auf die Kolbenstange 91 wirkende Kraft ergibt sich für den ersten Teil der Bewegung, bei dem auch der Hohlkolben 86 bewegt wird, aus dem Druck im Druckraum 94 und der Summe aus der Kolbenfläche 95 des Kolbens 88 und der Kolbenfläche 96 des Hohlkolbens 86. Die Kraft ist damit größer als die Kraft beim Ausschieben des Kolbens 88 und stehendem Hohlkolben 87. Sobald der Hohlkolben 86 steht, entspricht die Bewegung des Kolbens 88 der beschriebenen Bewegung des Kolbens nach links. Die Kraft sinkt also ebenfalls ab.

Soll die dargestellte Mittelstellung des Kolbens eingestellt werden, so muss die Bewegung des Kolbens 88 nach rechts durch rechtzeitige Belüftung der Druckkammer 93 abgebremst werden. Die Mittelstellung wird gehalten, wenn beide Druckräume 93 und 94 belüftet sind.

Da die Kolben-Zylindereinheit 37 drei stabile Stellungen aufweist und die aufgebrachte Kraft in beide Betätigungsrichtungen gleich groß ist, wird eine derartige Kolben-Zylindereinheit als symmetrischer Dreistellungszylinder bezeichnet. Es ist aber auch möglich, einen asymmetrischen Dreistellungszylinder zu verwenden, bei dem die in die beiden Betätigungsrichtungen wirkenden Kräfte unterschiedlich hoch sind.

In Fig. 9 ist beispielhaft für die Anordnung aller Ventile die Anordnung eines Ventils 42 im Schaltmodul 24 und der Steuerungseinrichtung 46 dargestellt. Gemäß Fig. 9 weist das Schaltmodul 24 eine hauptsächlich zylindrische Ausnehmung 49 auf, welche einen Teil des Ventils 42 aufnimmt. Das Schaltmodul 24 weist einen Nullabfluss 50 zur Umgebung auf, der fluchtend zu einer Druckleitung 40, welche als Verbraucheranschluss des Ventils 42 dient, angeordnet ist. Die Druckleitung 40 ist über einen Kanal 84 mit einem Druckraum einer Kolben-Zylindereinheit verbunden. Die Druckleitung 40 und der Nullabfluss 50 sind durch die Ausnehmung 49 getrennt. Außerdem weist das Schaltmodul 24 eine parallel zur Druckleitung 40 angeordnete Versorgungsleitung 51 auf, welche mit einem Druckluftanschluss verbunden ist. Über den Druckluftanschluss wird die Schalteinrichtung mit Druckluft versorgt. Die Versorgungsleitung 51 mündet ebenfalls in die Ausnehmung 49. Das Ventil 42 weist einen innerhalb der Ausnehmung 49 verschiebbaren, zylinderförmigen Kolben 52 auf. Der dem Kolben 52 entgegen liegende Teil 53 des Ventils 42 ist in der Steuerungseinrichtung 46 angeordnet. Ein Abschnitt des Teils 53 des Ventils 42 wird von einer elektromagnetischen Spule 54, welche auf einer Platine 55 der Steuerungseinrichtung 46 angeordnet ist, umschlossen. Ein von der Spule 54 gebildeter Hohlraum 63 stellt damit eine Ausnehmung der Steuerungseinrichtung 46 dar, die einen Teil des Ventils 42 aufnimmt. Durch eine entsprechende elektrische Ansteuerung der Spule 54 kann der Kolben 52 des Ventils 42 in der Ausnehmung 49 des Schaltmoduls 24 verschoben werden. Das Ventil 42 ist vollständig innerhalb der Steuerungseinrichtung 46 (nicht in Fig. 9 dargestellt) angeordnet.

In der dargestellten komplett eingefahrenen Stellung des Kolbens 52, wird die Spule 54 nicht mit Strom beaufschlagt. Die dargestellte Position stellt damit eine Ruheposition des Ventils 42 dar. In dieser Ruheposition ist die Druckleitung 40 mit dem Nullabfluss 50 über die Ausnehmung 49 verbunden. Der Druckraum der Kolben-Zylinder-Einheit 37 ist damit drucklos. Durch entsprechende Ansteuerung der Spule 54 kann der Kolben 52 so weit in Richtung Druckleitung 40 verschoben werden, dass die Druckleitung 40 vom Kolben 52 abgeschlossen wird. In dieser Stellung wird ein momentan herrschender Druck in der Druckleitung 40 beibehalten. Wird der Kolben 52 durch entsprechende Ansteuerung noch weiter verschoben, so wird die Versorgungsleitung 51 über eine Ausnehmung 57 des Kolbens 52 mit der Druckleitung 40 verbunden. In dieser Stellung wird dem Druckraum der Kolben-Zylindereinheit Druckluft zugeführt, der Druckraum wird also belüftet.

Die Schalteinrichtung weist insgesamt 15 Ventile auf, wobei 10 Ventile in der Modulgrundplatte 71 und 5 Ventile im Moduldeckel 72 angeordnet sind. Jeder der 5 Kolben-Zylindereinheiten 37, 73, 74, 75, 78 zur Betätigung der Schaltstangen 35, 66, 67 und 69 und des Gruppengetriebes 23 weist zwei Druckräume auf, denen jeweils ein Ventil zugeordnet ist. Zur Betätigung des Kupplungsausrückers sind 4 und für die Vorgelegewellenbremse ein Ventil notwendig.

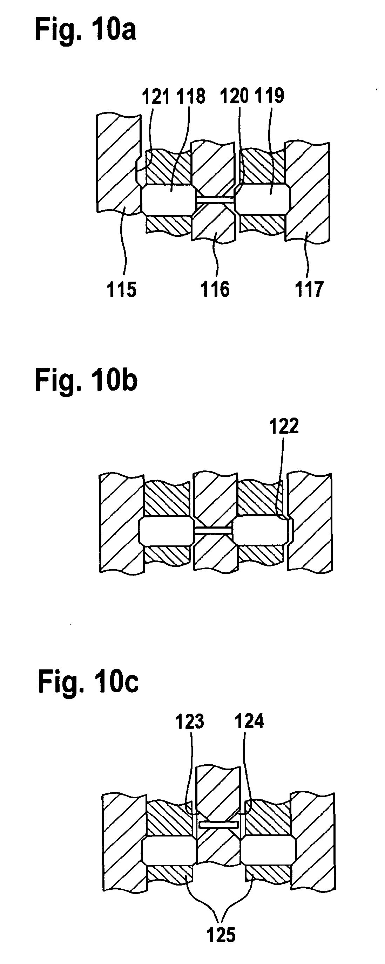

Im Betrieb des Getriebes 20 dürfen nie gleichzeitig zwei Gänge des Hauptgetriebes 22 eingelegt sein. Damit darf sich maximal eine Schaltstange des Hauptgetriebes 22 außerhalb einer Neutralstellung befinden. Dies wird mit einer Verriegelung der Schaltstangen gewährleistet. Die Verriegelung ist in den Fig. 10a, 10b und 10c schematisch dargestellt. Drei Schaltstangen 115, 116 und 117 sind parallel zueinander angeordnet. Die äußeren Schaltstangen 115 und 117 weisen jeweils eine Ausnehmung 121, 122 auf. Die mittlere Schaltstange 116 weist zwei diametral zueinander angeordnete Ausnehmungen 123 und 124 auf. In einem Gehäuse 125 sind zwei Sperrbolzen 118 und 119 verschieblich in einer Reihe gelagert. Zwischen den Sperrbolzen 118 und 119 ist ein Zwischenbolzen 120 angeordnet, der durch die Schaltstange 116 hindurchgeführt ist und ebenfalls verschoben werden kann.

In der in Fig. 10b dargestellten Stellung, in der sich alle Schaltstangen 115, 116 und 117 in der Neutralstellung befinden, sind die Ausnehmungen 121, 122, 123, 124, die Sperrbolzen 118, 119 und der Zwischenbolzen 120 so angeordnet, dass sich die Sperrbolzen 118 und 119 und der Zwischenbolzen 120 einzeln oder gemeinsam in Richtung beider äußerer Schaltstangen 115 und 117 verschieben lassen. Aus dieser Stellung heraus kann jede der Schaltstangen 115, 116 und 117 verschoben werden.

In der in der Fig. 10a dargestellten Stellung ist die äußere Schaltstange 115 aus der Neutralstellung heraus verschoben. Damit befindet sich der Sperrbolzen 118 nicht mehr in der Ausnehmung 121 der Schaltstange 115. Als Folge davon wird der Sperrbolzen 118 in die Ausnehmung 123 der Schaltstange 116 und der Sperrbolzen 119 unter Zwischenschaltung des Zwischenbolzens 120 in die Ausnehmung 122 der Schaltstange 117 gedrückt. Die Schaltstangen 116 und 117 sind damit gegenüber dem Gehäuse 125 fixiert und können nicht mehr verschoben werden.

In der in der Fig. 10c dargestellten Stellung ist die mittlere Schaltstange 116 aus der Neutralstellung heraus verschoben. Damit befinden sich die Sperrbolzen 118 und 119 nicht mehr in den Ausnehmungen 123 und 124 der Schaltstange 116. Als Folge davon wird der Sperrbolzen 118 in die Ausnehmung 121 der Schaltstange 115 und der Sperrbolzen 119 in die Ausnehmung 122 der Schaltstange 117 gedrückt. Die Schaltstangen 115 und 117 sind damit gegenüber dem Gehäuse 125 fixiert und können nicht mehr verschoben werden.

Die in den Fig. 10a, 10b und 10c dargestellte Verriegelung ist in einer Lagerplatte, in der die Schaltstangen des Getriebes 20 gelagert sind, integriert.

## Patentansprüche

1. Schalteinrichtung eines automatisierten Getriebes (20) eines Kraftfahrzeugs, mit einem Hauptgetriebe (22) und einer ersten Nebengruppe (23),
wobei
- Schaltelemente (34, 68, 70) des Hauptgetriebes (22) und der ersten Nebengruppe (23) mittels fluidbetätigten Kolben-Zylindereinheiten (37, 74, 75, 78) betätigbar sind,
- die Kolben-Zylindereinheiten (37, 74, 75) zum Betätigen des Hauptgetriebes (22) in einem Schaltmodul (24) zusammengefasst sind,
- die Kolben-Zylindereinheit (78) zum Betätigen der ersten Nebengruppe (23) vom Schaltmodul (24) beabstandet angeordnet ist und
- die vom Schaltmodul (24) beabstandet angeordnete Kolben-Zylindereinheit (78) mittels einer Fluidleitung (10) mit dem Schaltmodul (24) verbunden ist,
**dadurch gekennzeichnet, dass**
das Schaltmodul (24) über eine Modulgrundplatte (71) verfügt, welche einen Teil der Zylinder der Kolben-Zylindereinheiten (37, 74, 75) und zumindest einen Teil eines Gehäuses (82) einer Vorgelegewellenbremse und/oder einen Teil eines zentralen Kupplungsausrückers (83) einer Anfahrkupplung (76) bildet.

2. Schalteinrichtung nach Anspruch 1,
**dadurch gekennzeichnet, dass**
jeder Kolben-Zylindereinheit (37, 74, 75, 78) ein einzelnes Schaltelement (34, 68, 70) des Hauptgetriebes (22) oder der ersten Nebengruppe (23) zugeordnet ist.

3. Schalteinrichtung nach Anspruch 1 oder 2,
**dadurch gekennzeichnet, dass**
die vom Schaltmodul (24) beabstandet angeordnete Kolben-Zylindereinheit (78) in einem Gehäuse (81) der ersten Nebengruppe (23) angeordnet sein kann.

4. Schalteinrichtung nach einem der vorhergehenden Ansprüche,
**dadurch gekennzeichnet, dass**
das Getriebe (20) eine zweite Nebengruppe (77) aufweist und eine Kolben-Zylindereinheit (73) zum Betätigen eines Schaltelements (65) der zweiten Nebengruppe (77) im Schaltmodul (24) angeordnet ist.

5. Schalteinrichtung nach einem der vorhergehenden Ansprüche,
**dadurch gekennzeichnet, dass**
- die Schaltelemente (34, 65, 68, 70) mittels elektromagnetisch betätigbaren Ventilen (42) ansteuerbar sind,
- das Schaltmodul (24) Ausnehmungen (49) aufweist, wobei jede Ausnehmung (49) jeweils eines der Ventile (42) teilweise aufnehmen kann,
wobei die Ventile (42) von einer Steuerungseinrichtung (46) angesteuert werden, welche,
- am Schaltmodul (24) angeordnet ist,
- Ausnehmungen (63) aufweist, wobei ebenfalls jede Ausnehmung (63) jeweils eines der Ventile (42) teilweise aufnehmen kann und
- über Spulen (54) zur elektromagnetischen Betätigung der Ventile (42) verfügt,
wobei die Ausnehmungen (49, 63) und die Spulen (54) so angeordnet sind, dass jeweils eine Ausnehmung (49) des Schaltmoduls (24) und eine Ausnehmung (63) der Steuerungseinrichtung (46) so zusammenwirken, dass sie gemeinsam ein Ventil (42) aufnehmen und das Ventil (42) mittels einer Spule (54) betätigbar ist.

6. Schalteinrichtung nach Anspruch 5,
**dadurch gekennzeichnet, dass**
alle Ventile (42) untereinander austauschbar sind.

7. Schalteinrichtung nach Anspruch 5 oder 6,
**dadurch gekennzeichnet, dass**
die Ausnehmungen (49) des Schaltmoduls (24) und die Steuerungseinrichtung (46) so angeordnet sein können, dass die Steuerungseinrichtung (46) und die Ventile (42) entfernt werden können, ohne ein Gehäuse (79, 80, 81) des Getriebes (20) öffnen zu müssen.

8. Schalteinrichtung nach einem der vorhergehenden Ansprüche,
**dadurch gekennzeichnet, dass**
die Schalteinrichtung ein vom Schaltmodul (24) beabstandet angeordnetes Sensormodul (25) aufweist, wobei das Sensormodul (25) über Sensoren (103-109, 112) verfügt, mittels welchen Betriebsgrößen des Getriebes (20) erfassbar sind und die Sensoren (103-109, 112) zumindest mittelbar mit einer Steuerungseinrichtung (46) in Signalverbindung stehen.

9. Schalteinrichtung nach Anspruch 8,
**dadurch gekennzeichnet, dass**
das Sensormodul (25) zwischen Hauptgetriebe (22) und erster Nebengruppe (23) angeordnet sein kann.

10. Schalteinrichtung nach Anspruch 8 oder 9,
**dadurch gekennzeichnet, dass**
das Sensormodul (25) über ein Auswertemodul (113) verfügt, welches Signale der Sensoren (103-109, 112) erfasst, vorverarbeitet und über Datenleitungen (13) an die Steuerungseinrichtung (46) sendet.

11. Schalteinrichtung nach einem der Ansprüche 8 - 10,
**dadurch gekennzeichnet, dass**
das Sensormodul (25) von der Steuerungseinrichtung (46) über Versorgungsleitungen (12) mit einer Versorgungsspannung versorgt wird.

12. Schalteinrichtung nach einem der Ansprüche 8 - 11,
**dadurch gekennzeichnet, dass**
Versorgungsleitungen (12) und/oder Signalleitungen (13) zwischen dem Sensormodul (25) und der Steuerungseinrichtung (46) in einem Teilabschnitt an der Fluidleitung (11) zwischen Schaltmodul (24) und Kolben-Zylindereinheit (78) der Nebengruppe (23) entlang geführt sind.

13. Schalteinrichtung nach Anspruch 12,
**dadurch gekennzeichnet, dass**
die Fluidleitung (11), die Versorgungsleitungen (12) und/oder Datenleitungen (13) in dem genannten Teilabschnitt gemeinsam in einen Kunststoffmantel (14) eingebettet sind.

## Claims

1. Shifting device of an automatic gearbox (20) of a motor vehicle, with a main gearbox (22) and a first auxiliary group (23),
wherein
- shifting components (34, 68, 70) of the main gearbox (22) and the first auxiliary group (23) are actuated by fluid-operated piston-and-cylinder assembles (37, 74, 75, 78).
- the piston-and-cylinder assemblies (37, 74, 75) for actuating the main gearbox (22) are combined in a shifting module (24),
- the piston-and-cylinder assembly (78) for actuating the first auxiliary group is located at a distance from the shifting module (24), and
- the piston-and-cylinder assembly (78) located at a distance from the shifting module (24) is connected to the shifting module (24) via a fluid line (10),
**characterised in that**
the shifting module (24) is provided with a module base plate (71) forming a part of the piston and cylinder assemblies (37, 74, 75) and at least a part of a housing (82) of a layshaft brake and/or a part of a central clutch release unit (83) of a starting clutch (76).

2. Shifting device according to claim 1,
**characterised in that**
a single shifting component (34, 68, 70) of the main gearbox (22) or of the first auxiliary group (23) is assigned to each piston and cylinder assembly (37, 74, 75, 78).

3. Shifting device according to claim 1 or 2,
**characterised in that**
the piston-and-cylinder assembly (78) located at a distance from the shifting module (24) may be located in a housing (81) of the first auxiliary group (23).

4. Shifting device according to any of the preceding claims,
**characterised in that**
the gearbox (20) comprises a second auxiliary group (77), and **in that** a piston-and-cylinder unit (73) for actuating a shifting component (65) of the second auxiliary group (77) is located in the shifting module (24).

5. Shifting device according to any of the preceding claims,
**characterised in that**
- the shifting components (34, 65, 68, 70) are selected by means of electromagnetically operated valves (42),
- the shifting module (24) has recesses (49), each recess (49) being capable of partially accomodating one of the valves (42), wherein the valves (42) are selected by a control unit (46) which
- is located on the shifting module (24),
- has recesses (63), each recess (63) also being capable of partially accommodating one of the valves (42), and
- is provided with coils (54) for the electromagnetic actuation of the valves (42),
wherein the recesses (49 ,63) and the coils (54) are arranged such that each of the recesses (49) of the shifting module (24) and each of the recesses (63) of the control unit (46) act together such that they jointly accommodate one valve (42) and the valve (42) can be actuated by means of a coil (54).

6. Shifting device according to claim 5,
**characterised in that**
all of the valves (42) are mutually interchangeable.

7. Shifting device according to claim 5 or 6,
**characterised in that**
the recesses (49) of the shifting module (24) and the control unit (46) may be arranged such that the control unit (46) and the valves (42) can be removed without having to open a housing (79, 80, 81) of the gearbox (20).

8. Shifting device according to any of the preceding claims,
**characterised in that**
the shifting device comprises a sensor module (25) located at a distance from the shifting module (24), wherein the sensor module (25) is provided with sensors (103-109, 112) by means of which operating variables of the gearbox (20) can be detected, and wherein the sensors (103-109, 112) are in at least indirect signal connection with a control unit (46).

9. Shifting device according to claim 8,
**characterised in that**
the sensor module (25) may be located between the main gearbox (22) and the first auxiliary group (23).

10. Shifting device according to claim 8 or 9,
**characterised in that**
the sensor module (25) is provided with an evaluation module (113) which detects and conditions signals of the sensors (106-109, 112) and transmits them to the control unit (46) via data lines (13).

11. Shifting device according to any of claims 8 to 10,
**characterised in that**
the sensor module (25) is provided with a supply voltage by the control unit (46) via supply lines (12).

12. Shifting device according to any of claims 8 to 11,
**characterised in that**
the supply lines (12) and/or signal lines (13) between the sensor module (25) and the control unit (46) are guided along the fluid line (11) between the shifting module (24) and the piston-and-cylinder assembly (78) of the auxiliary group (23) in a section.

13. Shifting device according to claim 12.
**characterised in that**
the fluid lines (11), the supply lines (12) and/or the data lines (13) are jointly embeded in a plastic sheath (14) in the said section.

## Revendications

1. Dispositif de changement de vitesses d'une boîte de vitesses (20) automatique d'un véhicule à moteur, avec une boîte de vitesses (22) principale et une première boîte de vitesses (23) auxiliaire,
- des éléments (34, 68, 70) de changement de vitesses de la boîte de vitesses (22) principale et de la première boîte de vitesses (23) auxiliaire étant actionnés au moyen d'unités piston - cylindre (37, 74, 75, 78) actionnées par un fluide,
- les unités piston - cylindre (37, 74, 75) pour l'actionnement de la boîte de vitesses (22) principale étant réunis dans un module de changement de vitesses (24),
- l'unité piston -cylindre (78) pour l'actionnement de la première boîte (23) de vitesses auxiliaire étant disposée à une certaine distance du module de changement de vitesses (24) et
- l'unité piston-cylindre (78) disposée à une certaine distance du module (24) de changement de vitesses étant reliée au module (24) de changement de vitesses au moyen d'une conduite (10) de fluide,
**caracterisé en ce que**
le module (24) de changement de vitesses dispose d'une plaque (71) de base de module laquelle forme une partie du cylindre des unités piston - cylindre (37, 74, 75) et au moins une partie d'un carter (82) d'un frein d'arbre intermédiaire et/ou une partie d'un mécanisme de débrayage (83) central d'un embrayage (76) de démarrage.

2. Dispositif de changement de vitesses selon la revendication 1,
**caractérisé en ce que**
chaque unité piston - cylindre (87, 74, 75, 78) est affectée à un élément de changement de vitesses (34, 63, 70) individuel de la boîte de vitesses (22) principale ou de la première boîte de vitesses (23) auxiliaire.

3. Dispositif de changement de vitesses selon la revendication 1 ou 2,
**caractérisé en ce que**
l'unité piston - cylindre (78) disposée à une certaine distance du module de changement de vitesses (24) peut être disposée dans un carter (81) de la première boîte de vitesses (23) auxiliaire.

4. Dispositif de changement de vitesses selon l'une quelconque des revendications précédentes,
**caractérisé en ce que**
la boîte de vitesses (20) présente une seconde boîte de vitesses (77) auxiliaire et une unité (73) piston - cylindre pour l'actionnement d'un élément (65) de changement de vitesses de la seconde boîte de vitesses (77) auxiliaire est disposèe dans le module de changement de vitesses (24).

5. Dispositif de changement de vitesses selon l'une quelconque des revendications précédentes,
**caractérisé en ce que**
- les éléments de changement de vitesses (34, 65, 68, 70) peuvent être commandés au moyen de soupapes (42) pouvant être actionnées électromagnétiquement,
- le module (24) de changement de vitesses présente des évidements (49), chaque évidement (49) pouvant respectivement loger partiellement une des soupapes (42),
les soupapes (42) pouvant être commandées par un dispositif de commande (46), lequel,
- est disposé sur le module (24) de changement de vitesses,
- présente des évidements (63), chaque évidement (63) respectivement pouvant également loger partiellement une des soupapes (42) et
- dispose de bobines (54) pour l'actionnement électromagnétique des soupapes (42),
les évidements (49, 63) et les bobines (54) sont disposés de manière telle qu'à chaque fois un évidement (49) du module de changement de vitesses (24) et un évidement (63) du dispositif de commande (46) coopèrent de telle sorte qu'ils logent ensemble une soupape (42) et que la soupape (42) puisse être actionnée au moyen d'une bobine (54).

6. Dispositif de changement de vitesses selon la revendication 5,
**caractérisé en ce que**
toutes les soupapes (42) peuvent être interchangeables les unes avec les autres.

7. Dispositif de changement de vitesses selon la revendication 5 ou 6,
**caractérisé en ce que**
les évidements (49) du module de changement de vitesses (24) et le dispositif de commande (46) peuvent être disposés de manière telle que le dispositif de commande (46) et les soupapes (42) puissent être enlevés sans devoir ouvrir un carter (79, 80, 81) de la boîte de vitesses (20).

8. Dispositif de changement de vitesses selon l'une quelconque des revendications précédentes,
**caractérisé en ce que**
le dispositif de changement de vitesse présente un module du capteur (25) disposé à une certaine distance du module (24) de changement de vitesses, le module (25) de capteur disposant de capteurs (103 - 109, 112), au moyen desquels des paramètres de fonctionnement de la boîte de vitesses (20) peuvent être détectés et les capteurs (103 - 109, 112) sont au moins indirectement en liaison de signal avec un dispositif de commande (46).

9. Dispositif de changement de vitesses selon la revendication 8,
**caractérisé en ce que**
le module de capteur (25) peut être disposé entre la boîte de vitesses (22) principale et la première boîte de vitesses (23) auxiliaire.

10. Dispositif de changement de vitesses selon la revendication 8 ou 9,
**caractérisé en ce que**
le module (25) de capteur dispose d'un module (113) d'évaluation, lequel détecte, prétraite et transmet des signaux des capteurs (103 - 109, 112) au dispositif de commande (46) au moyen d'une ligne de données (13).

11. Dispositif de changement de vitesses selon l'une quelconque des revendications 8 à 10,
**caractérisé en ce que**
le module de capture (25) du dispositif de commande (46) est alimenté en tension d'alimentation au moyen de circuits d'alimentaion (12).

12. Dispositif de changement de vitesses selon l'une quelconque des revendications 8 à 11,
**caractérisé en ce que**
des circuits d'alimentation (12) et/ ou des conduites de signal (13) sont guidés entre le module de capteur (25) et le dispositif de commande (46) dans une région partielle sur la conduite de fluide (11) entre le module de changement de vitesse (44) et l'unité piston - cylindre (78) le long de la boîte de vitesses (23) auxiliaire.

13. Dispositif de changement de vitesses selon la revendication 12,
**caractérisé en ce que**:
la conduite de fluide (11), les circuits d'alimentation (12) et/ou les lignes de données (13) sont insérées ensemble dans la dite région partielle dans une gaine (14) en plastique.
